# EUROPÄISCHE PATENTANMELDUNG

(11) **EP 2 360 755 A1**
(43) Veröffentlichungstag der Anmeldung: **24.08.2011**
(21) Anmeldenummer: 10153692.8
(22) Anmeldetag: 16.02.2010
(51) Int. Cl.: H01M 2/10

(54) **Energieversorgungseinheit für ein elektrisches Gerät**

(71) Anmelder: Marlafin AG, 6332 Hagendorn (CH)
(72) Erfinder: Conroy, David, Brooklyn, NY 11231 (US)
(74) Vertreter: AMMANN PATENTANWÄLTE AG BERN

(57) **Zusammenfassung**

Eine Energieversorgungseinheit (1) für ein elektrisches Gerät enthält ein Gehäuse (2,3) mit einer Aussenwand und eine im Gehäuse (2,3) angeordnete elektrische Energiequelle (4). Damit die Energiequelle zwecks getrennter Entsorgung entfernt werden kann, aber die Energieversorgungseinheit nicht mit einer neuen Energiequelle ausgerüstet werden kann, ist ein nicht wiederverschliessbarer Aufreissverschluss (10,13) vorgesehen.

## Beschreibung

Die Erfindung betrifft eine Energieversorgungseinheit für ein elektrisches Gerät, enthaltend ein Gehäuse mit einer Aussenwand und eine im Gehäuse angeordnete elektrische Energiequelle.

Eine derartige Energieversorgungseinheit ist beispielsweise in der Patentanmeldung US2007/0260210A1 beschrieben. Das Dokument betrifft eine vibrierende Tampon-Anordnung zur Bekämpfung von menstrualen Schmerzen. Die Anordnung umfasst ein in einem Tampon angeordnetes Vibrationselement und eine mit dem Tampon durch ein Kabel verbundene Energieversorgungseinheit, in welcher eine elektrische Energiequelle angeordnet ist. Die elektrische Verbindung zwischen der elektrischen Energiequelle und dem Vibrationselement wird mit einem in der Energieversorgungseinheit angeordneten Befehlselement gesteuert. Durch das Befehlselement kann das Vibrationselement impulsweise zum Testen in Betrieb gesetzt werden. Für die bestimmungsgemässe Verwendung wird das Vibrationselement ständig mit der Energiequelle verbunden und diese Verbindung kann nicht mehr unterbrochen werden, so dass das Vibrationselement bis zur Erschöpfung der Energiequelle vibriert. Der Zweck dieser Funktionsweise besteht darin, zu gewährleisten, dass die Tamponanordnung, aus Sicherheitsgründen für die Anwenderin, nur einmal verwendet werden kann. Die Wiederverwendung wird zudem dadurch verhindert, dass die Energieversorgungseinheit in einem geschlossenen Gehäuse angeordnet ist, das ohne dessen Zerstörung nicht geöffnet werden kann, so dass die elektrische Energiequelle nicht ersetzt werden kann.

Die Entsorgung solcher Tampon-Anordnungen ist problematisch, weil die üblicherweise verwendeten Energiequellen Schwermetalle wie Quecksilber enthalten. In manchen Ländern ist es verboten, solche Energiequellen beispielsweise im Haushaltsabfall zu entsorgen. Andererseits verhindert das geschlossene Gehäuse, dass die Energiequelle vor der Entsorgung der Tampon-Anordnung entnommen wird.

Es ist eine Aufgabe der vorliegenden Erfindung, eine Energieversorgungseinheit für ein elektrisches Gerät vorzuschlagen, die das Entfernen der darin enthaltenen elektrischen Energiequelle ermöglicht und dabei verhindert, dass die Energieversorgungseinheit wieder in Betrieb genommen werden kann.

Diese Aufgabe wird erfindungsgemäss dadurch gelöst, dass in der Aussenwand ein nicht wiederverschliessbarer Aufreissverschluss zum Bilden einer Öffnung zwecks Entnahme der elektrischen Energiequelle angeordnet ist.

Diese Lösung hat den Vorteil, dass durch den nicht wiederverschliessbaren Aufreissverschluss eine Öffnung gebildet wird, durch welche die Energiequelle entnommen und getrennt entsorgt werden kann. Sollte aber jemand eine neue Energiequelle einsetzen, kann diese Öffnung nicht wieder verschlossen werden.

Nach einer Ausführungsart ist der Aufreissverschluss durch eine Schwächungslinie in der Aussenwand des Gehäuses gebildet. Dies erlaubt eine besonders einfache Herstellung.

Eine andere Ausführungsart sieht vor, dass das Gehäuse aus Kunststoff besteht. Auch diese Massnahme gestattet eine besonders einfache Herstellung, beispielsweise durch Spritzgiessen.

Nach einer weiteren Ausführungsart ist das Gehäuse aus zwei Gehäusehälften zusammengesetzt. Dadurch ist eine einfache Montage der Energieversorgungseinheit möglich.

Eine andere Ausführungsart sieht vor, dass die Gehäusehälften durch von aussen nicht zugängliche Rastelemente miteinander verbunden sind. Dadurch wird verhindert, dass durch Trennen und Wiedervereinigen der Gehäusehälften die Energieversorgungseinheit mit einer frischen Energiequelle ausgestattet wird.

Gemäss einer anderen Ausführungsart ist der Aufreissverschluss durch einen in das Gehäuse eingesetzten Einsatz gebildet. Gegenüber der Lösung mit einer Schwächungslinie eröffnet diese Ausführungsart mehr Freiheit bei der Gestaltung des Gehäuses und des Aufreissverschlusses.

Wenn nach einer weiteren Ausführungsart die Energieversorgungseinheit ein elektrisches Befehlselement, insbesondere einen Schalter enthält, wird deren Funktion zu einer Energieversorgungs- und Steuereinheit erweitert.

Vorteilhaft ist gemäss einer weiteren Ausführungsart das Befehlselement unter einem verformbaren Bereich der Aussenwand angeordnet. Auf diese Weise kann das Gehäuse dicht ausgebildet sein und das Befehlselement durch Druck auf die Aussenwand betätigt werden. Besonders vorteilhaft ist es, wenn der verformbare Bereich der Aussenwand den Aufreissverschluss bildet.

Nach einer anderen Ausführungsart ist der Aufreissverschluss mit einer Grifflasche ausgestattet. Die Grifflasche kann mit den Fingern ergriffen werden, um den Aufreissverschluss zu entfernen.

Eine weitere vorteilhafte Ausführungsart sieht vor, dass im Aufreissverschluss ein Kontaktelement für die elektrische Energiequelle integriert ist. Da dieses Kontaktelement nach dem Aufreissen des Verschlusses nicht mehr an seinem Platz sitzt, wird es noch schwieriger, die Energieversorgungseinheit mit einer frisch eingesetzten Energiequelle zum Funktionieren zu bringen.

Die Erfindung betrifft auch ein Verfahren zum Herstellen einer Energieversorgungseinheit. Dieses zeichnet sich dadurch aus, dass ein Gehäuseteil im Spritzgussverfahren aus einem ersten Kunststoff hergestellt wird, wobei eine Ausnehmung ausgelassen wird und dass die Ausnehmung durch Einspritzen eines weiteren Kunststoffes zur Bildung eines Einsatzes verschlossen wird.

Nach einer Ausführungsart des Verfahrens wird gleichzeitig mit dem Einspritzen des weiteren Kunststoffs ein Kontaktelement teilweise umspritzt. Dadurch wird bei der Montage der Energieversorgungseinheit ein Schritt eingespart.

Ausführungsbeispiele der Erfindung werden nachstehend unter Bezugnahme auf die angefügten Zeichnungen näher beschrieben. Es zeigt
- Figur 1: eine Seitenansicht der Energieversorgungseinheit,

- Figur 2: eine perspektivische Explosionsansicht der Energieversorgungseinheit,
- Figur 3: eine Schnittansicht der Energieversorgungseinheit in gegenüber den Figuren 1 und 2 vergrössertem Massstab,
- Figur 4a: eine perspektivische Ansicht der Energieversorgungseinheit,
- Figur 4b: eine Ansicht entsprechend Figur 4a mit teilweise geöffnetem Aufreissverschluss und
- Figur 4c: eine Ansicht entsprechend den Figuren 4a und 4b mit ganz abgerissenem Aufreissverschluss.

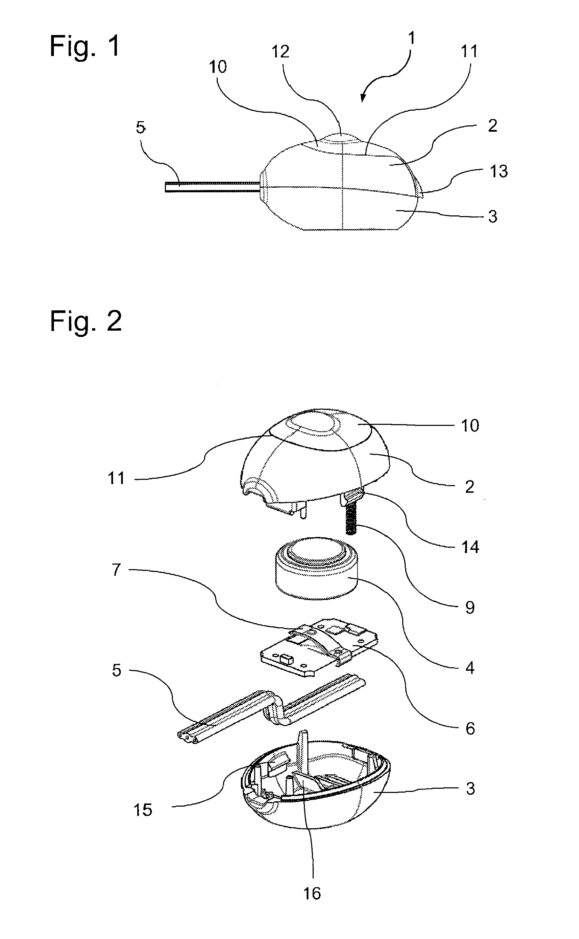

Figur 1 zeigt eine Seitenansicht einer als Ganzes mit 1 bezeichneten Energieversorgungseinheit für die Versorgung eines elektrischen Gerätes. Das Gerät ist nicht zeichnerisch dargestellt und nicht Gegenstand der Erfindung. Die Energieversorgungseinheit 1 umfass ein aus einem Gehäuse-Oberteil 2 und einem Gehäuse-Unterteil 3 bestehendes Gehäuse, in dem eine weiter unten beschrieben elektrische Energiequelle angeordnet ist. Ein Kabel 5 verbindet die Energieversorgungseinheit mit dem erwähnten elektrischen Gerät. Im Gehäuse-Oberteil 2 ist ein einen Aufreissverschluss bildender Einsatz 10 angeordnet, der entlang einer Trennlinie 11 mit dem Gehäuse-Oberteil verbunden ist. Der Einsatz 10 hat eine in der Figur nach oben vorstehende Erhebung 12, deren Funktion weiter unten noch beschrieben wird. Eine am Einsatz 10 angeformte Grifflasche 13 dient zum leichten Ergreifen und Abreissen des Einsatzes 10.

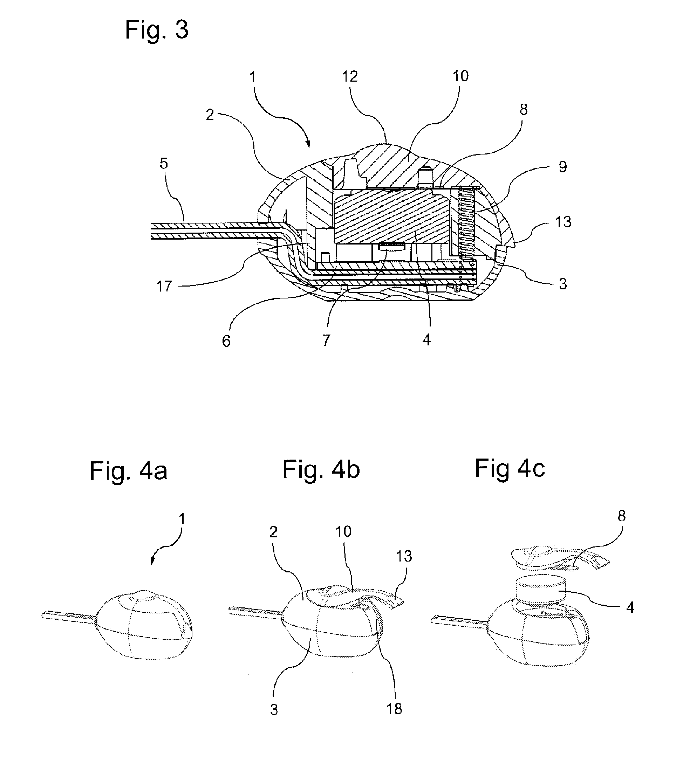

Figur 2 zeigt die Energieversorgungseinheit in einer perspektivischen Explosionsansicht. Im dargestellten Beispiel ist die elektrische Energiequelle eine Batterie 4, insbesondere eine so genannte Knopfbatterie, wie sie in elektrischen Kleingeräten eingesetzt werden. Oberhalb der Batterie 4 ist der Gehäuse-Oberteil 2 mit dem Einsatz 10 und der Trennlinie 11 dargestellt. Unterhalb der Batterie 4 sieht man eine Leiterplatte 6, an welcher eine Kontaktfeder 7 angeordnet ist, deren Funktion weiter unten beschrieben wird. Ausserdem trägt die Leiterplatte 6 vorzugsweise elektronische Schaltelemente, die hier nicht detailliert dargestellt sind. Unterhalb der Leiterplatte 6 sind in der Figur nicht sichtbare Schneidklemmen angeordnet, auch IDC (insulation displacement connectors) genannt. Zuunterst in Figur 2 sieht man den Gehäuse-Unterteil mit darin eingeformten Rippen 16 für die Stützung der Leiterplatte 6. Die Funktion der Feder 9 wird nachstehend unter Bezugnahme auf die Figur 3 erläutert. Beim Montieren der Energieversorgungseinheit werden die einzelnen Komponenten in der in Figur 2 dargestellten Reihenfolge von oben nach unten angeordnet und dann der Gehäuse-Oberteil 2 auf den Gehäuse-Unterteil 3 gedrückt. Bei diesem Vorgang, der ohne Zuhilfenahme von Werkzeugen ausgeführt werden kann, verbinden sich die Schneidklemmen mit dem Kabel 5. Schliesslich rasten die am Gehäuse-Oberteil 2 angeformten Rasthaken 14 in am Gehäuse-Unterteil 3 vorhandene Rasthaken 15 ein, so dass die Gehäuseteile 2, 3 miteinander verbunden sind. An Stelle von Rasthaken könnten in einem der Gehäuseteile 2, 3 Ausnehmungen angeordnet sein, in welche die Rasthaken des anderen Gehäuseteils 3, 2 einrasten. Durch entsprechende Gestaltung der Rasthaken 14, 15, insbesondere der Winkel an den miteinander einrastenden Stellen, kann verhindert werden, dass das die Gehäuseteile 2, 3 ohne Zerstörung voneinander getrennt werden.

Figur 3 zeigt eine Schnittdarstellung des Ausführungsbeispiels der erfindungsgemässen Energieversorgungseinheit 1 in einem gegenüber den vorangehend beschriebenen Figuren vergrösserten Massstab. Wie vorher beschrieben ist im Gehäuse-Oberteil 2 der Einsatz 10 derart angebracht, dass er entlang der Trennlinie 11 (Figur 2) am Gehäuse-Oberteil anhaftet. Die Erhebung 12 des Einsatzes 10 dient in diesem Ausführungsbeispiel zum Betätigen eines integrierten Schalters, der folgendermassen funktioniert. Die Batterie 4 liegt auf der Kontaktfeder 7 auf und wird durch diese in der Figur nach oben gedrückt. Oberhalb der Batterie 4 ist ein Kontaktplättchen 8 angeordnet, das den oben liegenden Pol der Batterie 4 kontaktiert und über die Feder 9 leitend mit der auf der Leiterplatte 6 vorhandenen Schaltungsanordnung verbindet. Wird auf die Erhebung 12 ein Druck ausgeübt, gibt die Kontaktfeder 7 nach, bis sie eine auf der Leiterplatte 6 angeordnete Leiterbahn kontaktiert und dadurch einen Stromkreis schliesst, was dazu führt, dass dem elektrischen Gerät über das Kabel 5 Strom zugeführt wird. Die Schaltungsanordnung kann dabei so ausgebildet sein, dass wenn die Erhebung nur kurz gedrückt wird, die Stromzufuhr nach dem Loslassen wieder unterbrochen wird und dass nach einem längeren Druck auf die Erhebung 12 die Stromzufuhr auch nach dem Loslassen aufrecht erhalten wird. Die Feder 9 sichert den Kontakt zwischen der Leiterplatte und dem Kontaktplättchen 8 auch bei Massabweichungen der verschiedenen Bauteile, welche sich beispielsweise durch Fertigungstoleranzen ergeben können.
Wie man sieht, ist das Kabel 5 im Gehäuse-Unterteil 3 durch eine Rippe 17 umgelenkt, wodurch sich eine Ausreisssicherung für das Kabel 5 ergibt.

Die Gehäuseteile 2 und 3 werden vorteilhaft aus einem Kunststoff im Spritzgussverfahren hergestellt. Dabei kann beispielsweise der Gehäuse-Oberteil als einstückiger Spritzgussteil hergestellt sein, wobei die Trennlinie 11 als Schwächungslinie ausgebildet ist, die den zum Abreissen bestimmten Einsatz 10 umgibt. Im vorliegenden Beispiel ist aber der Einsatz 10 aus einem vom Material des Gehäuse-Oberteils abweichenden, vorzugsweise weicheren Material hergestellt und haftet am Material des Gehäuse-Oberteils 2 an. Durch die Zusammensetzung der Kunststoffe kann der Grad der Anhaftung gesteuert werden. Die Anhaftung kann durch eine Vergrösserung der Kontaktfläche zwischen den Teilen 2 und 10 weiter erhöht werden. Alternativ könnte auch einer der Teile 2 oder 10 einen Hinterschnitt aufweisen und dadurch den anderen Teil in seiner Position festhalten. Dies würde aber die Werkzeugkosten erheblich steigern.

Vorteilhaft wird der Gehäuse-Oberteil 2 mit dem Einsatz 10 in einem Spritzgusswerkzeug stufenweise hergestellt. Dabei wird zuerst der Gehäuse-Oberteil 2 aus einem ersten Kunststoff gespritzt. Das Kontaktplättchen 8 wurde vorteilhaft schon vorher in die Form eingelegt. In einem weiteren Arbeitsgang wird ein zweiter, vorzugsweise weicherer Kunststoff eingespritzt und bildet den Einsatz 10 mitsamt der angeformten Grifflasche 13, wobei gleichzeitig das Kontaktplättchen 8 umspritzt und im Einsatz 10 eingebettet wird. Weiter ist es vorteilhaft, wenn dafür gesorgt wird, dass im Bereich 18 (Figur 4b), in dem die Grifflasche 13 mit dem Gehäuse-Oberteil 2 in Kontakt steht zwischen diesen Teilen 2, 13 keine oder höchstens eine sehr geringe Haftung besteht, um das Ergreifen der Grifflasche zu erleichtern. Dies kann beispielsweise durch Anbringen eines Trennmittels erfolgen.

Die Figuren 4a bis 4c zeigen in drei Schritten das Vorgehen beim Entfernen der Batterie 4. Während in Figur 4a die Energieversorgungseinheit noch vollständig geschlossen ist, wurde gemäss der Darstellung in Figur 4b die Grifflasche 13 bereits etwas angehoben. In der Darstellung nach Figur 4c ist ersichtlich, dass der Einsatz 10 ganz vom Gehäuse-Oberteil 2 getrennt wurde. Anschliessend muss das Gehäuse nur noch umgedreht werden und die Batterie 4 fällt heraus. Nun können die Batterie 4 und die übrigen Teile getrennt entsorgt werden.

### Bezugszeichenliste

- 1: Energieversorgungseinheit
- 2: Gehäuse-Oberteil
- 3: Gehäuse-Unterteil
- 4: Batterie
- 5: Kabel
- 6: Leiterplatte
- 7: Kontaktfeder
- 8: Kontaktplättchen
- 9: Feder
- 10: Einsatz
- 11: Trennlinie
- 12: Erhebung
- 13: Grifflasche
- 14: Rasthaken
- 15: Rasthaken
- 16: Rippe
- 17: Rippe
- 18: Bereich
- 19:
- 20:

## Patentansprüche

1. Energieversorgungseinheit (1) für ein elektrisches Gerät, enthaltend ein Gehäuse (2, 3) mit einer Aussenwand und eine im Gehäuse (2, 3) angeordnete elektrische Energiequelle (4), **dadurch gekennzeichnet, dass** in der Aussenwand ein nicht wiederverschliessbarer Aufreissverschluss (10, 13) zum Bilden einer Öffnung zwecks Entnahme der elektrischen Energiequelle (4) angeordnet ist.

2. Energieversorgungseinheit nach Anspruch 1, **dadurch gekennzeichnet, dass** der Aufreissverschluss durch eine Schwächungslinie in der Aussenwand des Gehäuses (2, 3) gebildet ist.

3. Energieversorgungseinheit nach einem der vorangehenden Ansprüche, **dadurch gekennzeichnet, dass** das Gehäuse (2, 3) aus Kunststoff besteht.

4. Energieversorgungseinheit nach einem der vorangehenden Ansprüche, **dadurch gekennzeichnet, dass** das Gehäuse (2, 3) aus mindestens zwei Gehäusehälften (2, 3) zusammengesetzt ist.

5. Energieversorgungseinheit nach Anspruch 4, **dadurch gekennzeichnet, dass** die Gehäusehälften (2, 3) durch von aussen nicht zugängliche Rastelemente (14, 15) miteinander verbunden sind.

6. Energieversorgungseinheit nach einem der vorangehenden Ansprüche, **dadurch gekennzeichnet, dass** der Aufreissverschluss durch einen in das Gehäuse (2, 3) eingesetzten Einsatz (10) gebildet ist.

7. Energieversorgungseinheit nach einem der vorangehenden Ansprüche, **dadurch gekennzeichnet, dass** sie ein elektrisches Befehlselement, insbesondere einen Schalter enthält.

8. Energieversorgungseinheit nach Anspruch 7, **dadurch gekennzeichnet, dass** das Befehlselement unter einem verformbaren Bereich der Aussenwand angeordnet ist.

9. Energieversorgungseinheit nach Anspruch 8, **dadurch gekennzeichnet, dass** der verformbare Bereich der Aussenwand den Aufreissverschluss bildet.

10. Energieversorgungseinheit nach einem der vorangehenden Ansprüche, **dadurch gekennzeichnet, dass** der Aufreissverschluss mit einer Grifflasche (13) ausgestattet ist.

11. Energieversorgungseinheit nach einem der vorangehenden Ansprüche, **dadurch gekennzeichnet, dass** im Aufreissverschluss (10, 13) ein Kontaktelement (8) für die elektrische Energiequelle (4) integriert ist.

12. Verfahren zum Herstellen einer Energieversorgungseinheit nach einem der Ansprüche 4 bis 11, **dadurch gekennzeichnet, dass** ein Gehäuseteil (2) im Spritzgussverfahren aus einem ersten Kunststoff hergestellt wird, wobei eine Ausnehmung ausgelassen wird und dass die Ausnehmung durch Einspritzen eines weiteren Kunststoffes zur Bildung eines Einsatzes (10) verschlossen wird.

13. Verfahren nach Anspruch 12, **dadurch gekennzeichnet, dass** gleichzeitig mit dem Einspritzen des weiteren Kunststoffs ein Kontaktelement (8) teilweise umspritzt wird.
